# EUROPÄISCHE PATENTSCHRIFT

(11) **EP 1 255 346 B1**
(45) Veröffentlichungstag und Bekanntmachung des Hinweises auf die Patenterteilung: **29.06.2005**
(21) Anmeldenummer: 02100390.0
(22) Anmeldetag: 18.04.2002
(51) Int. Cl.: H02M 3/337, H01F 27/24, H01F 27/32, H01F 38/16, G05F 1/335, H02M 7/5383, H05B 39/04

(54) **Transformator mit integrierter Drossel**
Transformer with integrated choke coil
Transformateur avec inductance integrée

(30) Priorität: 19.04.2001 DE 10119106
(43) Veröffentlichungstag der Anmeldung: 06.11.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Ackermann, Bernd, Dr., Weisshausstrasse 2, 52066 Aachen (DE)
(74) Vertreter: Volmer, Georg, Dipl.-Ing.

(56) Entgegenhaltungen:
- EP-A- 1 071 101
- DE-A- 4 318 995
- US-A- 5 889 373
- PATENT ABSTRACTS OF JAPAN vol. 2000, no. 02, 29. Februar 2000 (2000-02-29) & JP 11 307377 A (NISSIN ELECTRIC CO LTD), 5. November 1999 (1999-11-05)

## Beschreibung

Die vorliegende Erfindung bezieht sich auf einen Transformator mit einer zusätzlichen integrierten Drossel und auf ein Schaltnetzteil mit einem solchen Transformator.

Schaltnetzteile in Resonanzbauweise benötigen für den Resonanzkreis wenigstens ein induktives Bauelement und ein kapazitives Bauelement. Das induktive Bauelement ist meist eine Spule (Drossel), welche in Verbindung mit einem Kondensator an der Primär- oder Sekundärwicklung eines Transformators angeschlossen ist. Ein solches Schaltnetzteil in Resonanzbauweise ist aus US 4,692,851 bekannt. Hier liegt die Primärwindung in Reihe mit einer Drossel, während auf der Sekundärseite die Hauptsekundärwindung eine parallele Kapazität aufweist. Auf diese Art und Weise sorgen in der Anordnung die Induktivität der Drossel zusammen mit der Kapazität des Kondensators für die benötigten Resonanzschwingungen.

Aus der US-Patentschrift 5,889,373 ist ein schwach gekoppelter Transformator bekannt, der aus drei in Reihe liegenden Kernen besteht, wobei ein äußerer Kern die Primärwicklung trägt und der andere äußere Kern zwei Sekundärwicklungen trägt. Durch jeweilige Luftspalte zwischen den äußeren Kernen und dem mittleren Kern wird die schwache Kopplung derart justiert, das der primärseitig erzeugte magnetische Fluss hauptsächlich über den wicklungslosen, mittleren Kern fließt.

Es ist Aufgabe der vorliegenden Erfindung, einen Transformator mit einer integrierten Streuinduktivität zu versehen, so dass auf ein separates induktives Bauelement verzichtet werden kann und eine Vereinfachung im Aufbau von resonanten Schaltnetzteilen möglich ist.

Die Aufgabe wird erfindungsgemäß gelöst durch einen Transformator gemäß Anspruch 1.

Durch die bauliche Trennung der einzelnen Kerne ist es möglich, diese jeweils auf den Hauptfluss oder den Streufluss hin zu optimieren. Trotzdem können Standardkomponenten benutzt werden, da jeder Kern nur einen Querschnitt aufweist. Dies reduziert die Herstellungskosten deutlich. Da der Hauptfluss von der sogenannten Hauptpermeanz und der Streufluss von der sogenannten Streupermeanz abhängig ist, sind diese Permeanzen entsprechend zu wählen. Die Permanenzen hängen wiederum von dem jeweiligen Luftspalt zwischen den einzelnen Kernen ab, welcher eine bestimmte Querschnittsfläche und eine bestimmte Länge aufweist. Die Kerne können allerdings auch aufeinandergeklebt sein, wenn nur eine geringe Permeanz erforderlich ist.

Die Ausgestaltungen nach den Ansprüchen 2 und 3 bieten den Vorteil, dass die drei Kerne jeweils optimal dem Fluss angepasst werden können, den sie führen. So sind sowohl die Größen Hauptfluss als auch Streufluss separat festzulegen. Außerdem sind über die Luftspalte zwischen den einzelnen Kernen die Streupermeanz und die Hauptpermeanz festzulegen.

Die Ausgestaltung gemäß Anspruch 4 bietet den großen Vorteil, dass eine zusätzliche Spule (Drossel) in Reihe zu entweder der Primärwindung oder der Sekundärwindung nicht erforderlich ist. Da Resonanzschaltnetzteile eine solche Spule benötigen, ist deren Aufbau somit vereinfacht, da ein Bauteil eingespart werden kann.

Die Ausgestaltungen nach den Ansprüchen 5 bis 8 stellen besonders vorteilhafte Ausgestaltungen der einzelnen Kerne dar.

Die Ausgestaltung nach Anspruch 9 erlaubt einen besonders kostengünstigen Aufbau eines erfindungsgemäßen Transformators. Die Hersteller von Magnetkernen für Transformatoren bieten alle standardisierte Querschnitte an. Magnetkerne mit anderen Querschnitten sind erheblich teurer, was in der Massenfertigung ein nicht zu unterschätzender Faktor ist. Deshalb ist es sinnvoll, auch für die drei unterschiedlich dimensionierten Magnetkerne Standardkomponenten zu verwenden.

Mit der Ausgestaltung nach Anspruch 10 wird der Vorteil der variablen Streuinduktivität eines Transformators in einem Schaltnetzteil genutzt. Vorzugsweise ist dies ein resonantes Schaltnetzteil.

Die vorliegende Erfindung wird im folgenden an Hand eines Ausführungsbeispiels und mehrerer Figuren näher beschrieben und erläutert. Es zeigen:
- Figur 1: ein Ersatzschaltbild des Magnetkreises in einem erfindungsgemäßen Transformator und
- Figur 2: eine Seitenansicht des erfindungsgemäßen Transformators.

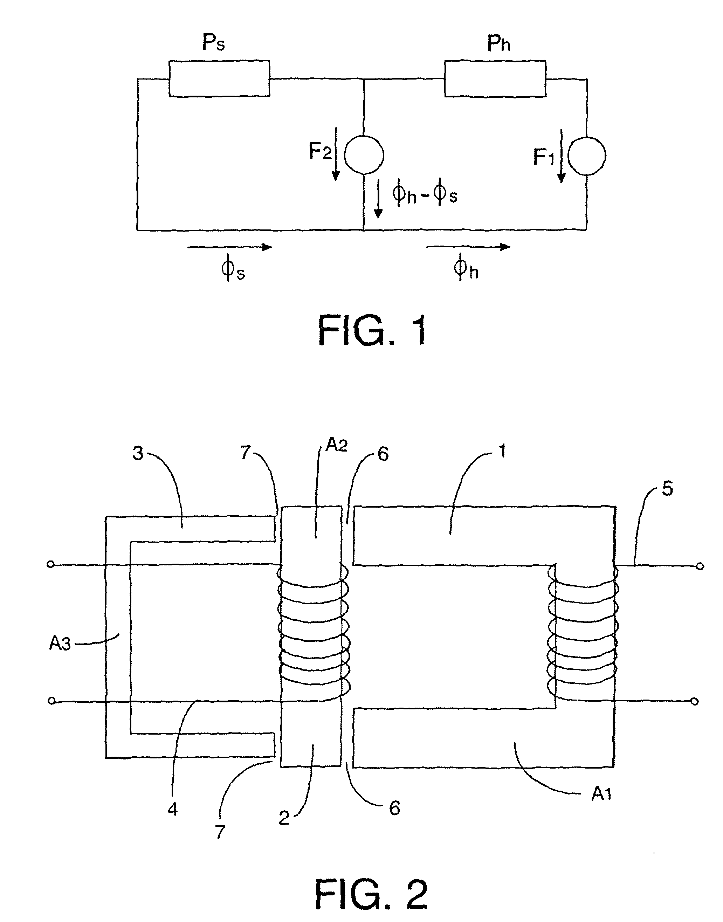

Ein Transformator mit integrierter Drossel besteht aus einem ersten Eisenkern 1, dem Kern für die Primärwicklung 5, einem zweiten Eisenkern 2, dem Kern für die Sekundärwicklung 4, und einem dritten Eisenkern, dem Streuflusskern 3. Alle drei Eisenkerne 1,2,3 sind separate Bauteile und sind daher durch Luftspalte 6, 7 voneinander baulich getrennt. Somit sind die Querschnitte der einzelnen Kerne völlig unabhängig voneinander dimensionierbar. Der erste Kern 1 trägt dabei die Primärwicklung 5, während der zweite Kern 2 die Sekundärwicklung 4 trägt. Die Anordnung ist so aufgebaut, dass der erste U-förmig gestaltete Kern 1 mit seiner offenen Seite nur durch einen Luftspalt 6 vom zweiten I-förmigen Kern 2 getrennt ist. Dieser I-förmige Kern 2 grenzt wiederum von einem Luftspalt 7 getrennt an den dritten auch U-förmigen Kern 3, welcher dem zweiten Kern 2 mit der offenen Seite zugewandt ist und den Streuflusskern darstellt. Die Kerne liegen somit in einer Reihe, wie es auch in Figur 2 zu sehen ist. Da sich die Kerne 1, 2, 3 nicht berühren, sind sie in einer hier nicht gezeigten Form auf einem gemeinsamen Bauteil montiert. Dieses Bauteil kann z. B. eine Platine sein, wie sie in Schaltnetzteilen üblich ist. Außerdem kann zumindest der Luftspalt 6 zwischen dem ersten Kern 1 und dem zweiten Kern 2 entfallen und stattdessen ein anderes Medium vorhanden sein. Insbesondere kann der erste Kern 1 auch am zweiten Kern 2 angeklebt oder anderweitig befestigt sein.

An der Primärwicklung 5 mit N₁ Windungen liegt eine magnetische Spannung F₁ = N₁ * I₁ an, während an der Sekundärwicklung 4 mit N₂ Windungen entsprechend eine magnetische Spannung F₂ = N₂ * I₂ anliegt. Die sogenannte Hauptpermeanz Pₕ, welche die Hauptinduktivität bestimmt, wird hier durch die Luftspalte 6 realisiert. Diese Luftspalte 6 haben jeweils einen Querschnitt Aₕ, identisch mit dem Querschnitt A₁ des ersten Kerns 1, und eine Länge lₕ, welche der Distanz zwischen dem ersten Kern 1 und dem zweiten Kern 2 entspricht. Der mittlere I-förmige Kern 2 hat dementsprechend den Querschnitt A₂. Die sogenannte Streupermeanz Pₛ, welche die Streuinduktivität bestimmt, wird durch die Luftspalte 7 realisiert. Diese Luftspalte 7 haben jeweils einen Querschnitt Aₛ, identisch mit dem Querschnitt A₃ des dritten Kerns 3, und eine Länge lₛ, welche der Distanz zwischen dem dritten Kern 3 und dem zweiten Kern 2 entspricht. Da die Luftspalte 6 und 7 jeweils zweifach vorhanden sind ergeben sich die Permeanzen zu P_{b} = µ₀ * Aₕ /2 lₕ für die Hauptpermeanz Pₕ und zu Pₛ = µ₀ * Aₛ/2 lₛ für die Streupermeanz Pₛ. Über die beiden Permeanzen und die magnetischen resultierenden Flüsse Φₕ und Φₛ lässt sich entsprechend dem magnetischen Ersatzschaltbild in Figur 1 der Zusammenhang mit den Strömen I₁ und I₂ herstellen, denn es gilt Φₕ = (F₁ - F₂) * Pₕ und Φₛ = F₂ * Pₛ. Bei der erfindungsgemäßen Anordnung können die Längen lₕ und lₛ und die Querschnitte A₂, Aₕ (= A₁) und Aₛ (= A₃) unabhängig voneinander ausgewählt werden. Dies ergibt dem Konstrukteur mehr gestalterische Freiheiten und erlaubt eine optimale Anpassung der Querschnitte A₁, A₂ und A₃ der Kerne 1, 2, 3 an den jeweils zu leitenden resultierenden magnetischen Fluss.

Auch die Permeanzen und damit die Induktivitäten sind über die Längen Iₕ und Iₛ frei wählbar. Trotzdem können auch hier Standardquerschnitte verwendet werden, um Kosten zu reduzieren, wenn jeder Kern seinen eigenen standardisierten Querschnitt aufweist. Die Ausformung der Kerne 1 und 3 in U-Form und des Kerns 2 in I-Form ist natürlich nicht die einzige denkbare Lösung Insbesondere können die Schenkel der beiden U-förmigen Kerne 1 und 3 kürzer oder länger ausgeführt werden. Es ist auch möglich, den Kern 1 oder den Kern 3 gegenüber dem Kern 2 um einen Winkel z.B. 90° versetzt anzuordnen. Damit wird die Länge der Anordnung verkürzt, wobei dann eine größere Breite notwendig ist. Insgesamt ist damit der Transformator aber kompakter.

## Patentansprüche

1. Transformator mit einem ersten Kern (1), welcher wenigstens eine Primärwicklung (5) trägt, mit einem zweiten Kern (2), welcher wenigstens eine Sekundärwicklung (4) trägt, und mit einem dritten Kern (3), wobei die Kerne (1,2, 3) jeweils separate Bauteile sind, in einer Reihe liegen und der zweite Kern (2) der mittlere Kern ist und wobei der zweite Kern (2) von einem Luftspalt (7) getrennt an den dritten Kern (3) grenzt.

2. Transformator nach Anspruch 1,
**dadurch gekennzeichnet,**
**dass** der erste Kern (1) vom zweiten Kern (2) durch wenigstens einen weiteren Luftspalt (6) getrennt ist.

3. Transformator nach Anspruch 2,
**dadurch gekennzeichnet,**
**dass** die Luftspalte (6, 7) derart gestaltet sind, dass der erste Kern (1) im wesentlichen einen Hauptfluss (Φₕ) leitet, dass der dritte Kern (3) im wesentlichen einen Streufluss (Φₛ) leitet und dass der zweite Kern (2) im wesentlichen die Differenz zwischen Hauptfluss und Streufluss leitet.

4. Transformator nach Anspruch 3,
**dadurch gekennzeichnet,**
**dass** der Streufluss (Φₛ) durch den dritten Kern (3) die Wirkung einer in den Transformator integrierten Drossel hat, welche mit der Sekundärwicklung (4) in Reihe verschaltet ist.

5. Transformator nach einem der Ansprüche 1 bis 4,
**dadurch gekennzeichnet,**
**dass** der erste Kern (1) U-förmig gestaltet ist.

6. Transformator nach einem der Ansprüche 1 bis 5,
**dadurch gekennzeichnet,**
**dass** der dritte Kern (3) U-förmig gestaltet ist.

7. Transformator nach einem der Ansprüche 1 bis 6,
**dadurch gekennzeichnet,**
**dass** der zweite Kern (2) I-förmig gestaltet ist.

8. Transformator nach einem der Ansprüche 1 bis 7,
**dadurch gekennzeichnet,**
**dass** der erste Kern (1), der zweite Kern (2) und der dritte (3) Kern jeweils unterschiedliche Querschnitte (A₁, A₂, A₃) aufweisen.

9. Transformator nach einem der Ansprüche 1 bis 8,
**dadurch gekennzeichnet,**
**dass** der erste Kern (1), der zweite Kern (2) und der dritte (3) Kern jeweils standardisierte Querschnitte (A₁, A₂, A₃) aufweisen.

10. Schaltnetzteil mit einem Transformator mit einem ersten Kern (1), welcher wenigstens eine Primärwicklung (5) trägt, mit einem zweiten Kern (2), welcher wenigstens eine Sekundärwicklung (4) trägt, und mit einem dritten Kern (3), wobei die Kerne (1, 2, 3) jeweils separate Bauteile sind, in einer Reihe liegen und der zweite Kern (2) der mittlere Kern ist und wobei der zweite Kern (2) von einem Luftspalt (7) getrennt an den dritten Kern (3) grenzt.

## Claims

1. A transformer provided with a first core (1) which has at least a primary winding (5), a second core (2) which has at least a secondary winding (4), and a third core (3), where each core (1, 2, 3) is a separate component, is connected in series and the second core (2) is the middle core and where the second core (2) borders on the third core (3) separated by an air gap (7).

2. A transformer as claimed in claim 1, **characterized in that** the first core (1) is separated from the second core (2) by at least an air gap (6).

3. A transformer as claimed in claim 2, **characterized in that** the air gaps (6, 7) are designed so that the first core (1) essentially carries a main flux (Φₕ), **in that** the third core (3) essentially carries a stray flux (Φₛ) and **in that** the second core essentially carries the difference between main flux and stray flux.

4. A transformer as claimed in claim 3, **characterized in that** the stray flux (Φₛ) through the third core (3) has the effect of an choke coil integrated with the transformer, which choke coil is connected in series with the secondary winding (4).

5. A transformer as claimed in any one of claims 1 to 4, **characterized in that** the first core (1) has a U-shaped design.

6. A transformer as claimed in any one of claims 1 to 5, **characterized in that** the third core (3) has a U-shaped design.

7. A transformer as claimed in any one of claims 1 to 6, **characterized in that** the second core (2) has an I-shaped design.

8. A transformer as claimed in any one of claims 1 to 7, **characterized in that** he first core (1), the second core (2) and the third core (3) each have different sections (A₁, A₂, A₃).

9. A transformer as claimed in any one of claims I to 8, **characterized in that** the first core (1), the second core (2) and the third core (3) each have a standardized section (A₁, A₂, A₃).

10. A switched-mode power supply with a transformer provided with a first core (1) which has at least a primary winding (5), a second core (2) which has at least a secondary winding (4), and a third core (3), where each core (1, 2, 3) is a separate component, is connected in series and the second core (2) is the middle core and where the second core (2) borders on the third core (3) separated by an air gap (7).

## Revendications

1. Transformateur avec un premier noyau (1) qui porte au moins un enroulement primaire (5), avec un deuxième noyau (2) qui porte au moins un enroulement secondaire (4) et avec un troisième noyau (3), dans lequel les noyaux (1, 2, 3) sont respectivement des composants séparés, sont montés en série et le deuxième noyau (2) est le noyau central et dans lequel le deuxième noyau (2), séparé par un entrefer (7), est adjacent au troisième noyau (3).

2. Transformateur selon la revendication (1),
**caractérisé en ce**
**que** le premier noyau (1) est séparé du deuxième noyau (2) par au moins un entrefer (6) supplémentaire.

3. Transformateur selon la revendication (2),
**caractérisé en ce**
**que** les entrefers (6, 7) sont conçus de telle sorte que le premier noyau (1) conduise essentiellement un flux principal (Φₕ), que le troisième noyau (3) conduise essentiellement un flux de dispersion (Φₛ) et que le deuxième noyau (2) conduise essentiellement la différence entre le flux principal et le flux de dispersion.

4. Transformateur selon la revendication 3,
**caractérisé en ce**
**que** le flux de dispersion (Φₛ) a par le troisième noyau (3) l'action d'une bobine d'induction intégrée dans le transformateur qui est montée en série avec l'enroulement secondaire (4).

5. Transformateur selon l'une des revendications 1 à 4,
**caractérisé en ce**
**que** le premier noyau (1) est conçu en forme de U.

6. Transformateur selon l'une des revendications 1 à 5,
**caractérisé en ce**
**que** le troisième noyau (3) est conçu en forme de U.

7. Transformateur selon l'une des revendications 1 à 6,
**caractérisé en ce**
**que** le deuxième noyau (2) est conçu en forme de I.

8. Transformateur selon l'une des revendications 1 à 7,
**caractérisé en ce**
**que** le premier noyau (1), le deuxième noyau (2) et le troisième noyau (3) présentent respectivement des sections différentes (A₁, A₂, A₃).

9. Transformateur selon l'une des revendications 1 à 8,
**caractérisé en ce**
**que** le premier noyau (1), le deuxième noyau (2) et le troisième noyau (3) présentent respectivement des sections standardisées (A₁, A₂, A₃).

10. Partie de réseau de commutation dotée d'un transformateur avec un premier noyau (1), qui porte au moins un enroulement primaire (5), avec un deuxième noyau (2) qui porte au moins un enroulement secondaire (4) et avec un troisième noyau (3), dans laquelle les noyaux (1, 2, 3) sont respectivement des composants séparés, sont disposés en série et le deuxième noyau (2) est le noyau central et dans laquelle le deuxième noyau (2), séparé par un entrefer (7) est adjacent au troisième noyau (3).
